**Europäisches Patentamt**

**European Patent Office**

**Office européen des brevets**

(19)

(11) Numéro de publication: **0 145 629**
**B1**

# FASCICULE DE BREVET EUROPÉEN

(45) Date de publication du fascicule du brevet:
25.11.87

(51) Int. Cl.⁴: **B 32 B 31/08**

(21) Numéro de dépôt: **84440055.6**

(22) Date de dépôt: **19.11.84**

(54) **Procédé de fabrication en continu d'un complexe souple de perméabilité contrôlée.**

(30) Priorité: **21.11.83 FR 8318771**

(43) Date de publication de la demande:
**19.06.85 Bulletin 85/25**

(45) Mention de la délivrance du brevet:
**25.11.87 Bulletin 87/48**

(84) Etats contractants désignés:
**AT BE CH DE GB IT LI LU NL SE**

(56) Documents cité:
**BE-A-749 995**
**DE-A-2 400 642**

(73) Titulaire: **PROUVOST S.A., 149, rue d'Oran, F-59061 Roubaix Nord (FR)**

(72) Inventeur: **Sorez, Jean- Claude, 18 rue Delespaul, F-59100 Roubaix (Nord) (FR)**

(74) Mandataire: **Lepage, Jean- Pierre, Cabinet Lepage & Aubertin Innovations et Prestations 23/25, rue Nicolas Leblanc B.P. 1069, F-59011 Lille Cédex 1 (Nord) (FR)**

EP 0 145 629 B1

LIBER, STOCKHOLM 1987

## Description

L'invention est relative à un procédé de fabrication en continu d'un complexe souple de perméabilité contrôlée et une installation de mise en oeuvre du procédé. Elle trouvera notamment son application pour la fabrication de tenturage mural.

Particulièrement depuis une dizaine d'années, les revêtements muraux textiles grande largeur sont de plus en plus utilisés pour le recouvrement et la décoration de murs et de parois. Ces revêtements peuvent être soit de simples tissus, soit, et le plus souvent, des structures complexes faites d'une étoffe ou d'une nappe de fils ou de fibres liés à une ou plusieurs sous-couches souples par procédé de collage ou de soudage. Ces sous-couches sont fréquemment des feuilles de mousse ou des films de matière thermo-plastique. Produit en largeur légèrement supérieure à la hauteur courante des murs, c'est-à-dire en largeur de l'ordre de 2,70 m à 3 m, ces revêtements peuvent être posés soit par pose tendue, c'est-à-dire par agrafage et légère mise sous tension sur un cadre dont les côtés sont disposés le long des arêtes du mur, soit par pose collée-tendue, c'est-à-dire par collage localisé suivant des bandes de colle de quelques centimètres de largeur le long des arêtes du mur.

On peut classer les revêtements muraux actuels en deux catégories.

D'une part les revêtements muraux qui ne forment pas de barrière à l'air et à la vapeur d'eau, que l'on désignera par revêtement à structure ouverte.

D'autre part, les revêtements muraux formant barrière à l'air et à la vapeur d'eau qui sont désignés par revêtement à structure fermée.

Les revêtements muraux à structure ouverte, sont ceux ne comportant dans leur composition aucun film, feuille ou couche continue capable seul ou en combinaison de s'opposer à la traversée des dits revêtements par l'air ou de la vapeur d'eau.

Entrent dans cette catégorie les simples tissus ou les revêtements constitués d'un tissu soudé par calandrage sur une feuille de mousse à cellule ouverte au moyen d'une résille de matière thermoplastique insérée entre le tissu et la mousse.

En raison de la perméabilité à l'air, ces revêtements muraux à structure ouverte sont sujets à retenir à leur surface des dépôts de poussières atmosphériques arrêtées par effet filtre. Cet empoussiérage devient rapidement visible et est donc particulièrement préjudiciable dans le cas de coloris clairs.

En contrepartie des inconvénients liés à l'empoussiérage par effet filtre, les revêtements muraux à structure ouverte ont l'avantage de laisser respirer les murs, et donc de permettre l'évaporation en continu de l'humidité qui peut atteindre ceux-ci par exemple par propagation capillaire à partir des fondations de l'habitation.

Les revêtements à structure fermée sont ceux comportant dans leur composition un ou plusieurs films, feuilles ou couches continues capables seules ou en combinaison de s'opposer à la traversée des dits revêtements par l'air et par la vapeur d'eau. Tels sont par exemple les revêtements constitués d'un tissu soudé sur une feuille de mousse au moyen d'un film thermo-plastique continu de forte épaisseur insérée entre le tissu et la mousse ou encore les revêtements muraux au dos desquels est collée une pellicule continue. Les revêtements muraux à structure fermée, ne pouvant être traversés par des courants d'air, ne sont pas sujets aux phénomènes d'empoussiérage par effet filtre.

Par contre, les revêtements imperméables présentent l'inconvénient de s'opposer à l'évaporation naturelle de l'humidité pouvant atteindre les murs. Ceci peut créer des dommages conséquents tels que par exemple l'accumulation d'humidité dans les murs, d'où développement de moisissures qui entrainent une désagrégation du liant et des remontées d'humidité jusqu'au plafond de la pièce.

Il ressort de ce qui précède qu'actuellement, il est nécessaire de faire un choix entre des revêtements muraux totalement étanches ou totalement perméables avec les avantages et inconvénients qui en découlent.

Il faut d'ailleurs noter que ces propriétés de perméabilité ou d'imperméabilité ont également une importance pour d'autres applications telles que matériaux d'emballage, recouvrement de sièges, matériaux utilisés pour la confection de chaussures, vêtements de sport et autres.

Le but de la présente invention est d'obtenir un complexe dont la perméabilité à l'air et à la vapeur d'eau est contrôlée et ajustée pour obtenir une perméabilité optimum.

Les complexes réalisés selon le procédé de la présente invention présentent l'avantage d'être suffisamment perméables pour autoriser, dans le cas de revêtements muraux, une évaporation de l'humidité présente dans le mur couvert et par contre qui offrent une suffisamment grande résistance à la traversée de l'air pour minimis r l'effet de filtre et donc l'empoussiérage des dits revêtements.

Par ailleurs, le procédé de fabrication est réalisé en continu et permet d'obtenir un complexe de grande qualité à faible coût de revient, ceci avec un contrôle permanent de ses caractéristiques de perméabilité.

D'autres buts et avantages de la présente invention apparaitront au cours de la description qui va suivre, qui n'est cependant donnée qu'à titre indicatif et qui n'a pas pour but de la limiter.

Selon l'invention, le procédé de fabrication en continu d'un complexe souple de perméabilité contrôlée, destiné notamment au tenturage mural, le dit complexe se présentant sous la forme d'un assemblage de trois matériaux souples, à savoir deux couches de matériaux souples non étanches à l'air et à la vapeur d'eau, par exemple un textile, et une mousse, disposés de part et d'autre du troisième matériau constitué d'un film thermo-plastique continu, le dit complexe étant réalisé en chauffant le ou les matériaux souples et en soudant les différents matériaux souples entre eux, est caractérisé en ce que:

- on chauffe séparément et indépendamment chacune des trois couches à assembler avant leur rapprochement les unes des autres en les faisant défiler dans des moyens de chauffage,

- on soude les matériaux souples non étanches sur le film thermo-plastique intermédiaire par compression du complexe forme par superposition du film entre les dits matériaux souples,

- on mesure la perméabilité du complexe en continu et, pour obtenir la perméabilité recherchée, on ajuste les paramètres du soudage à savoir:

* vitesse de défilement des matériaux souples et du film thermo-plastique,
* et/ou pression exercée sur le complexe,
* et/ou température de chauffage du film thermo-plastique,
* et/ou température de chauffage des matériaux souples,
* et/ou épaisseur du film thermo-plastique.

L'installation de fabrication en continu d'un complexe souple de perméabilité contrôlée destiné notamment au tenturage mural permettant la mise en oeuvre du dit procédé de la présente invention, le dit complexe se présentant sous la forme d'un assemblage de trois matériaux souples, à savoir deux couches de matériaux souples non étanches à l'air et à la vapeur, tels qu'un textile et une mousse, disposés de part et d'autre du troisième matériau constitué d'un film thermo-plastique continu, la dite installation comprenant:

- des moyens pour délivrer en continu les dits matériaux souples en bande et le film thermo-plastique continu,

- des moyens pour faire défiler lesdits matériaux dans des moyens de chauffage,

- des moyens pour appliquer et comprimer en continu les matériaux souples de part et d'autre du film thermo-plastique afin de les souder ensemble,

est caractérisée par le fait qu'elle comprend:

- des moyens pour chauffer séparément et indépendamment, lesdites couches de matériaux souples ainsi que ledit film thermo-plastique à des températures indépendamment contrôlées,

- des moyens pour mesurer la perméabilité du complexe à trois couches ainsi formé en continu, pour asservir et ajuster les paramètres du soudage, à savoir la vitesse de défilement des matériaux souples et du film thermo-plastique, et/ou la pression exercée sur le complexe, et/ou la température de chauffage du film thermo-plastique, et/ou la température de chauffage des matériaux souples, et/ou l'épaisseur du film thermo-plastique, pour obtenir la perméabilité recherchée.

L'invention sera mieux comprise à la lecture de la description ci-dessous accompagnée de dessins en annexe parmi lesquels:

- la figure 1 illustre un premier mode de réalisation d'une installation de mise en oeuvre du procédé de la présente invention,

- la figure 2 illustre un second mode de réalisation d'une installation de mise en oeuvre de la présente invention.

On connait les procédés de fabrication en continu de complexes destinés par exemple au tenturage mural. Pour la réalisation de revêtements à structure ouverte, on utilise par exemple un film plastique intermédiaire fin, ou une résille, par contre, pour l'obtention de revêtements à structure fermée, on utilise généralement un film plastique intermédiaire de forte épaisseur, ce qui en outre a l'inconvénient de donner de la rigidité au complexe formé.

La présente invention vise plus particulièrement un procédé de fabrication en continu d'un complexe souple dont la perméabilité à l'air et à la vapeur d'eau est ajustable. Dans ces conditions, il sera possible d'obtenir un complexe final dont les propriétés de perméabilité peuvent aller depuis l'étanchéité jusqu'à la perméabilité quasi-totale. Selon les applications, on ajustera la perméabilité du complexe obtenu selon le procédé de la présente invention à la valeur la plus adaptée.

Le complexe de la présente invention est formé d'un assemblage de deux matériaux souples se présentant généralement sous forme de bandes, non étanches à l'air et à la vapeur d'eau. Ces matériaux souples peuvent être par exemple un textile et une mousse.

Ces matériaux souples sont disposés de part et d'autre d'un film thermo-plastique continu sur lequel ils sont soudés.

Pour des raisons techniques, la réaction en température est plus lente à obtenir qu'une modification quasi-instantanée de la pression exercée sur le complexe, aussi la correction des paramètres de soudage se fera, de préférence, en modifiant dans un premier temps la pression exercée sur le complexe, réaction qui peut être quasi-instantanée, puis en modifiant la température de chauffage du film thermo-plastique. La modification en température du film thermo-plastique étant plus lente à obtenir, au fur et à mesure de ce changement dans la variation en température du film thermo-plastique, on corrigera la pression exercée sur le complexe en conséquence pour conserver une perméabilité du complexe constante et égale à la valeur recherchée.

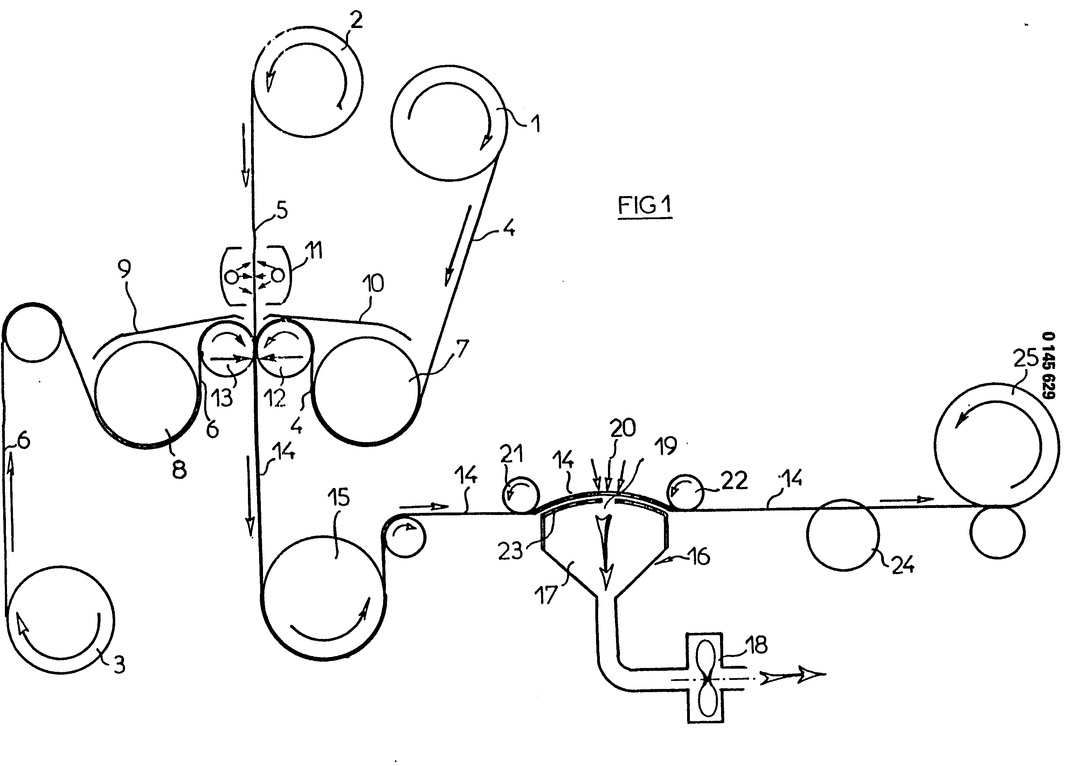

La figure 1 illustre une installation de mise en oeuvre du procédé de fabrication en continu d'un complexe souple selon la présente invention.

Dans l'exemple choisi, le complexe est formé par association d'un textile, film thermo-collant et mousse. Toutefois, selon la nature du complexe à fabriquer, on pourra utiliser d'autres matériaux.

L'installation comprend trois dévidoirs 1, 2 et 3 qui contiennent respectivement un premier matériau souple 4 qui, dans l'exemple choisi est un textile, un film 5 thermo-plastique et un second matériau souple 6 qui, dans l'exemple choisi est une mousse. Les matériaux souples ainsi que le film thermo-plastique 5 continu se présentent sous la forme de bandes.

Il est souhaitable d'utiliser des bandes dont la largeur est légèrement supérieure à celle du complexe final que l'on désire obtenir. Par exemple, dans le cas de tenturage mural, la largeur recherchée sera de l'ordre de 3 mètres, et on utilise avantageusement des bandes de largeur égale à 3,10 mètres.

Le matériau souple 6 utilisé pourra par exemple être une mousse de polyuréthane dont l'épaisseur sera comprise entre 2 et 5 mm environ.

Le film thermo-plastique continu 5 devra présenter une bonne adhérence par soudage à chaud avec les matériaux souples 4 et 6. Il pourra par exemple être utilisé un film de polyéthylène, son épaisseur sera généralement comprise entre 30 et 60 microns ou même davantage, toutefois pour obtenir un complexe final présentant une bonne souplesse, on limitera avantageusement l'épaisseur du film à 40 microns.

Les matériaux sont dévidés à une vitesse sensiblement égale qui correspondra à la vitesse finale de la machine.

Des moyens connus, à la portée de l'Homme de l'Art, sont utilisés pour assurer la régularité de tension de dévidage des matériaux souples et film ainsi que pour assurer leur positionnement l'un par rapport à l'autre.

La bande de matériaux souples 4, en sortie du dévidoir 1, vient s'enrouler autour d'un cylindre chauffant 7 qui ainsi élève la température du dit matériau souple 4.

De même, le matériau souple 6 vient s'enrouler en sortie de dévidoir 3 autour d'un cylindre chauffant 8 qui ainsi élève la température du dit matériau souple 6.

Les températures auxquelles sont respectivement portés les cylindres 7 et 8 sont ajustables, indépendamment l'une de l'autre, et on règlera ces températures de sorte à ce qu'elles soient respectivement inférieures aux températures maximales supportées par les matériaux 4 et 6 sans que ceux-ci subissent ni altération ou déformation. Dans la pratique, les températures des cylindres seront de l'ordre de 50 à 100 °C environ.

Les angles d'enroulement des matériaux 4 et 6 respectivement autour des cylindres chauffants 7 et 8 seront tels que les dits matériaux 4 et 6 soient effectivement portés à une température très voisine de celle des cylindres avec lesquels ils sont entrés en contact.

On pourra judicieusement placer des écrans 9 et 10 au-dessus des cylindres 7 et 8 pour confiner l'air chaud au niveau des matériaux souples alors que ceux-ci se sont dégagés des cylindres 7 et 8. Il est en effet souhaitable de minimiser les déperditions calorifiques des matériaux 4 et 6 après qu'ils aient été échauffés au contact des cylindres 7 et 8.

Parallèlement, le film thermo-plastique 5 continu est échauffé à la sortie du dévidoir 2, dans le cas présent, par l'intermédiaire d'un four à infrarouge 11 à travers lequel il transite.

L'opération de soudage des matériaux souples 4 et 6 sur le film thermo-plastique 5 intermédiaire est réalisée, à la figure 1, par l'intermédiaire de rouleaux de calandrage 12 et 13 entre lesquels les matériaux souples 4 et 6, en sortie de cylindres chauffants 7 et 8 sont comprimés sur le film thermo-plastique 5 intermédiaire issu du four à infrarouge 11.

La température ajustable à laquelle a été portée le film thermoplastique 5 dans le four à infrarouge 11 sera telle qu'elle donne, par ramollissement au moins superficiel, des propriétés d'adhérence par contact au dit film 5. En pratique, cette température sera de l'ordre de 120 à 200 °C environ.

L'effort de compression assuré par les rouleaux de calandrage 12 et 13 sera à cette fin ajustable. On pourra notamment utiliser un vérin qui permettra de rapprocher plus ou moins les deux rouleaux de calandrage 12 et 13 de manière à ce que les matériaux 4 et 6 et le film thermo-plastique 5 soient plus ou moins serrés et comprimés l'un contre l'autre durant leur passage dans les rouleaux de calandrage. De la sorte, les matériaux souples 4 et 6 et le film thermo-plastique sont liés à la sortie des rouleaux 12 et 13, par soudage, pour former un complexe 14.

Dans l'exemple de la figure 1 choisie, le complexe 14 est refroidi par passage autour d'un cylindre 15 dont la température est maintenue à un niveau particulièrement bas à l'aide d'un réfrigérant auxiliaire.

Selon le procédé objet de la présente invention, on mesure la perméabilité du complexe 14 en continu.

Le complexe 14, en sortie de cylindre 15, est testé à l'aide d'un dispositif 16 de mesure en continu de la perméabilité du complexe 14 et d'asservissement des paramètres du soudage.

Ce dispositif 16 se présente sous la forme d'un caisson 17 relié à une pompe 18 qui permet de créer dans le caisson une différence de pression par rapport à la pression atmosphérique extérieure.

Dans le cas illustré à la figure 1, on a adopté une dépression, ce qui constitue un mode de réalisation préférentiel du dispositif 16 toutefois une surpression aurait également pu être envisagée.

Le caisson 17 est en outre pourvu d'une ouverture 19 au-dessus de laquelle on fait défiler le complexe 14 qui masque la dite ouverture 19.

Il est impératif de plaquer le complexe 14 sur l'ouverture 19 de sorte à ce que le flux d'air 20 passant à travers l'ouverture 19 traverse le complexe 14 et ne puisse s'infiltrer entre le complexe et la surface du caisson 17.

Avantageusement, on utilisera pour appliquer correctement le complexe 14 sur la fente 19, une surface supérieure du caisson 17 légèrement bombée et de plus des rouleaux d'application 21 et 22 seront respectivement disposés en amont et en aval du caisson 17. Par ailleurs, la surface supérieure 23 du caisson 17 sur laquelle glisse le complexe 14 sera finement polie et traitée anti-adhérente par exemple par application d'une couche de téflon.

La pompe 18 permet d'entretenir un dépression dans le caisson 17 à une valeur prédéterminée. Par mesure du débit d'air parcourant la pompe 18, il est possible de connaître avec précision la perméabilité en continu du complexe 14 puisque le débit d'air parcourant la pompe 18 correspond au débit d'air 20 traversant le complexe 14 pour passer dans la fente 19. La mesure du débit d'air aspiré ou refoulé par la pompe 18 peut facilement être mesurée à l'aide par exemple d'un débitmètre à fil chaud. Le signal délivré par le débitmètre est donc proportionnel à la perméabilité du complexe 14. En analysant le signal délivré par le débitmètre par comparaison à un seuil pré-fixé, il est possible de le contrôler en permanence et en continu la perméabilité du complexe 14 ainsi obtenu.

Le complexe 14 après son passage dans le dispositif 16 est mis à largeur à l'aide de moyens connus 24 tels que des couteaux et ensuite mis en rouleau 25.

Il est dans l'objet de l'invention qu'après avoir été mesurée, la perméabilité puisse être ajustée à la valeur recherchée. A cet effet, l'installation comprendra un asservissement des paramètres du soudage du complexe 14.

Dans la pratique, une modification de la température d'échauffement est plus longue à obtenir que par exemple une modification de la pression de calandrage ou une modification de la vitesse de défilement. Aussi, généralement c'est par réaction immédiate sur la pression de calandrage ou sur la vitesse de défilement que l'asservissement réagira en premier puis dans un second temps, en raison de l'inertie thermique, on modifiera en général la température d'échauffement du film thermo-plastique 5 en jouant sur le rayonnement infrarouge du four 11.

Par exemple lorsque la température du film thermo-plastique 5 est de valeur faible, c'est-à-dire un peu supérieure à la température minimale permettant une adhérence par contact et si parallèlement l'écrasement exercé par les rouleaux de calandrage 12 et 13 est modéré, alors le film thermo-plastique conserve après soudage une structure peu modifiée et le complexe 14 obtenu présente une faible perméabilité à l'air et la vapeur d'eau.

Au contraire, dans le cas où la température du film thermoplastique 5 après passage dans le four 11 est élevée, c'est-à-dire de peu inférieure à la température maximale compatible avec une tenue suffisante du film, et si parallèlement la pression exercée par les rouleaux de calandrage 12 et 13 est importante, le film thermoplastique perd après soudage son caractère de continuité et le complexe 14 obtenu présente une perméabilité à l'air et à la vapeur d'eau élevée.

Il est possible de modifier les paramètres dans une large gamme et ainsi d'obtenir tout un éventail de perméabilités possibles pour le complexe réalisé selon le procédé de la présente invention.

Si l'on augmente la vitesse de défilement des bandes dans la machine, on obtient une diminution de la perméabilité du complexe et inversement.

Si l'on définit la perméabilité comme étant le nombre de litres d'air traversant en une seconde un mètre carré du complexe soumis entre ces deux faces à une différence de pression de 20 millimètres de hauteur d'eau, on peut estimer qu'un revêtement perméable du genre à cellule ouverte présente une perméabilité de l'ordre de 500 unités définie précédemment. Les complexes obtenus selon la présente invention pourront avoir une perméabilité comprise entre 0 et 500 unités, toutefois, des essais ont montré qu'une perméabilité de l'ordre de 20 unités est optimum dans le cas de tenturage mural.

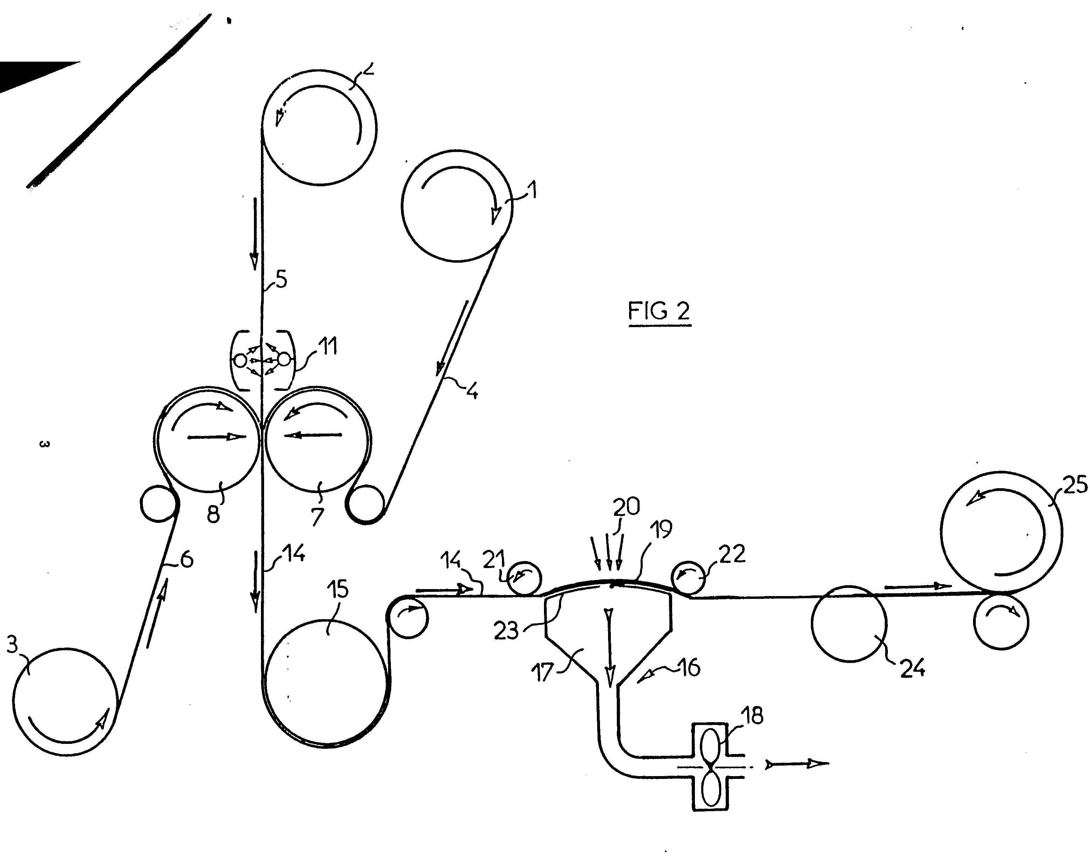

L'installation de la figure 2 est quasiment identique à l'installation de la figure 1 si ce n'est que les cylindres de chauffage 7 et 8 des matériaux souples 4 et 6 jouent en même temps le rôle de rouleaux de calandrage. Dans cette réalisation, les rouleaux de calandrage sont donc chauffants, ce qui simplifie l'équipement, toutefois, il faut noter que dans ce cas ce ne sont plus les faces des matériaux souples 4 et 6 qui vont être appliquées contre le film thermo-plastique 5 qui sont préchauffées mais les faces opposées et par conséquent il est nécessaire que la chaleur communiquée par les cylindres 7 et 8 aux matériaux 4 et 6 traverse les dits matériaux, ce qui fait que cette installation sera plus particulièrement réservée pour des applications où les épaisseurs des matériaux 4 et 6 seront relativement faibles c'est-à-dire n'excédant en pratique pas 4 millimètres d'épaisseur.

Il sera souhaitable de recouvrir la périphérie des cylindres 7 et 8 de téflon anti-adhérent.

Dans les exemples précédents, le film thermo-plastique 5 est délivré à partir d'un dévidoir 2, toutefois, on pourra également envisager d'obtenir le film thermo-plastique 5 directement en sortie d'extrudeuse équipée d'une filière plate, auquel cas le four 11 peut éventuellement être supprimé.

Cette réalisation offre l'intérêt de permettre de modifier très facilement l'épaisseur du film et donc de disposer d'un paramètre de soudage supplémentaire.

**Revendications**

1. Procédé de fabrication en continu d'un complexe souple de perméabilité contrôlée destiné au tenturage mural, le dit complexe se présentant sous la forme d'un assemblage de trois matériaux souples (4, 5 et 6), à savoir deux couches de matériaux souples (4 et 6) non étanches à l'air et à la vapeur d'eau, par exemple un textile et une mousse, disposés de part et d'autre du troisième matériau constitué d'un film thermo-plastique (5) continu, le dit complexe (14) étant réalisé en chauffant le ou les matériaux souples (4 à 6) et en soudant les différents matériaux souples entre eux, caractérisé en ce que:

- on chauffe séparément et indépendamment chacune des trois couches (4 à 6) à assembler avant leur rapprochement les unes des autres en les faisant défiler dans des moyens de chauffage,
- on soude les matériaux souples non étanches (4 et 6) sur le film thermo-plastique (5) intermédiaire par compression du complexe (14) formé par superposition du film (5) entre les dits matériaux souples (4 et 6),
- on mesure la perméabilité du complexe (14) en continu, et pour obtenir la perméabilité recherchée, on ajuste les paramètres du soudage à savoir:

* vitesse de défilement des matériaux souples (4 et 6) et du film thermo-plastique (5),
* et/ou pression exercée sur le complexe (14),
* et/ou température de chauffage du film thermo-plastique (5),
* et/ou température de chauffage des matériaux souples (4 et 6),
* et/ou épaisseur du film thermo-plastique (5).

2. Procédé selon la revendication 1, caractérisé en ce que l'on chauffe le film thermo-plastique (5) à souder en le faisant défiler dans un four à infrarouge (11).

3. Procédé selon la revendication 1, caractérisé en ce que l'on chauffe le matériau souple (4 et/ou 6) par un contact avec un cylindre chauffant (7 et/ou 8).

4. Procédé selon la revendication 2, caractérisé en ce que l'on chauffe le film thermo-plastique (5) dans un four à infrarouge.

5. Procédé selon la revendication 1, caractérisé en ce que l'on soude les matériaux souples (4 et 6) sur le film thermo-plastique (5) par compression du complexe (14) entre des rouleaux de calandrage (12 et 13).

6. Procédé selon la revendication 5, caractérisé en ce que l'on chauffe les matériaux souples (4 et 6) par enroulement de ces derniers autour des cylindres de calandrage (7 et 8) chauffants qui compriment ensuite les dits matériaux (4 et 6) sur le film thermo-plastique (5) introduit entre les dits matériaux (4 et 6).

7. Procédé selon la revendiction 1, caractérisé par le fait que le film thermo-plastique (5) est chauffé à une température supérieure à celle des dites couches de matériaux souples non étanches (4 et 6).

8. Installation de fabrication en continu d'un complexe souple de perméabilité contrôlée, destiné notamment au tenturage mural permettant la mise en oeuvre du procédé de la revendication 1, le dit complexe se présentant sous la forme d'un assemblage de trois matériaux souples (4 à 6), à savoir deux couches de matériaux souples (4 et 6) non étanches à l'air et à la vapeur, tels qu'un textile et une mousse, disposés de part et d'autre du troisième matériau constitué d'un film thermo-plastique (5) continu, la dite installation comprenant:

- des moyens pour délivrer en continu les dits matériaux souples (4 et 6) en bande et le film thermo-plastique (5) continu,
- des moyens pour faire défiler lesdits matériaux (4 à 6) dans des moyens de chauffage,
- des moyens pour appliquer et comprimer en continu les matériaux souples (4 et 6) de part et d'autre du film thermo-plastique (5) afin de les souder ensemble,

caractérisée par le fait qu'elle comprend:

- des moyens pour chauffer (7, 8 et 11), séparément et indépendamment, les dites couches de matériaux souples (4 et 6) ainsi que le dit film thermo-plastique (5) à des températures indépendamment contrôlées,
- des moyens (16) pour mesurer la perméabilité du complexe à trois couches ainsi formé en continu, pour asservir et ajuster les paramètres du soudage, à savoir la vitesse de défilement des matériaux souples (4 et 6) et du film thermo-plastique (5) et/ou la pression exercée sur le complexe (14), et/ou la température de chauffage du film thermo-plastique (5), et/ou la température de chauffage des matériaux souples (4 et 6), et/ou l'épaisseur du film thermo-plastique (5), pour obtenir la perméabilité recherchée.

9. Installation selon la revendication 8, caractérisée par le fait que le dispositif (16) de mesure en continu se présente sous la forme d'un caisson (17) relié à une pompe (18) qui permet de créer dans le caisson une différence de pression par rapport à la pression atmosphérique extérieure, le dit caisson (17) présentant une ouverture (18) au-dessus de laquelle on fait défiler le complexe (14) qui masque la dite ouverture de façon à le qu'un certain flux d'air (20) passe par l'ouverture (19) en traversant le complexe (14), le dit dispositif (16) réagissant en fonction du débit d'air passant à travers l'ouverture (19).

10. Installation selon la revendication 8, caractérisée par le fait qu'elle comprend:

- des dévidoirs (1 à 3) sur lesquels sont disposés les matériaux souples (4 et 6) en bande, par exemple un textile et une mousse, et le film thermo-plastique (5),
- des cylindres chauffants (7 et 8) sur lesquels les matériaux souples (4 et 6) viennent en contact,
- des moyens de chauffage (11) du film thermo-plastique (5), tels qu'un four à infrarouge (11),
- des rouleaux de calandrage (12 et 13) qui compriment les matériaux souples (4 et 6) sur le film thermo-plastique (5) pour les assembler par soudage et former un complexe (14).

**Patentansprüche**

1. Verfahren zur Herstellung eines biegsamen Verbundwerkstoffs mit kontrollierter Durchlässigkeit im Durchlaufverfahren, hauptsächlich für Wandbespannungen; der genannte Verbundstoff ist eine Verbindung von drei biegsamen Werkstoffen (4, 5 und 6), und zwar zwei Schichten von biegsamen Werkstoffen (4 und 6), die nicht luft- und wasserdampfdicht sind, zum Beispiel einer Textilschicht und einem Schaumstoff, die auf je einer Seite des dritten Werkstoffs angebracht sind, der aus einer endlosen thermoplastischen Folie (5) besteht. Der genannte Verbundstoff (14) wird durch Aufheizen des bzw. der biegsamen Werkstoffe hergestellt, und zwar werden die einzelnen biegsamen Stoffe miteinander verschweißt; dieses Verfahren ist dadurch gekennzeichnet, daß

- jede der drei Schichten (4 bis 6), die miteinander verbunden werden sollen, vor der Verbindung einzeln und unabhängig voneinander aufgeheizt wird, indem sie über Aufheizvorrichtungen läuft;

- die biegsamen, nicht dichten Werkstoffe (4 und 6) auf die thermoplastische Folie, die die Zwischenschicht bildet, durch Druckausübung auf den Verbundstoff (14) zusammengeschweißt werden, der durch Schichtung der Folie (5) zwischen die genannten biegsamen Stoffe (4 und 6) gebildet wird;

- die Durchlässigkeit des Verbundstoffes (14) kontinuierlich gemessen wird, und um die erwünschte Durchlässigkeit zu erreichen, werden die folgenden Schweißparameter verstellt:

* Durchlaufgeschwindigkeit der biegsamen Werkstoffe (4 und 6) und der thermoplastischen Folie (5),

* und/oder der auf den Verbundstoff (14) ausgeübte Druck,

* und/oder die Temperatur zum Aufheizen der thermoplastischen Folie (5),

* und/oder die Dicke der thermoplastischen Folie (5),

* und/oder die Temperatur zum Aufheizen der biegsamen Werkstoffe (4 und 6).

2. Verfahren nach Anspruch 1, dadurch gekennzeichnet, daß die zu verschweißende thermoplastische Folie (5) dadurch aufgeheizt wird, daß sie durch einen Infrarotofen (11) läuft.

3. Verfahren nach Anspruch 1, dadurch gekennzeichnet, daß der biegsame Werkstoff (4 und/oder 6) durch den Kontakt mit einer Aufheizwalze (7 und/oder 8) aufgeheizt wird.

4. Verfahren nach Anspruch 2, dadurch gekennzeichnet, daß die thermoplastische Folie (5) in einem Infrarot-Ofen aufgeheizt wird.

5. Verfahren nach Anspruch 1, dadurch gekennzeichnet, daß die biegsamen Werkstoffe (4 und 6) durch Zusammendrücken des Verbundstoffs (14) zwischen den Kalanderwalzen (12 und 13) auf die thermoplastische Folie (5) geschweißt werden.

6. Verfahren nach Anspruch 5, dadurch gekennzeichnet, daß die biegsamen Werkstoffe (4 und 6) aufgeheizt werden, indem sie um aufheizbare Kalanderzylinder (7 und 8) gerollt werden, die daraufhin die genannten Werkstoffe (4 und 6) auf die thermoplastische Folie (5) aufdrücken, nachdem sie zwischen die genannten Werkstoffe (4 und 6) eingeführt wurde.

7. Verfahren nach Anspruch 1, dadurch gekennzeichnet, daß die thermoplastische Folie (5) auf eine höhere Temperatur erhitzt wird als die genannten Schichten von biegsamem, nicht dichtem Material (4 und 6).

8. Fertigungsanlage mit Durchlaufverfahren für einen biegsamen Verbundstoff mit kontrollierter Durchlässigkeit, hauptsächlich für Wandbespannungen, die die Anwendung des Verfahrens nach Anspruch 1 ermöglicht; dieser Verbundstoff hat die Form einer Verbindung von drei biegsamen Werkstoffen (4 bis 6), und zwar zwei Schichten von biegsamen Werkstoffen (4 und 6), die nicht luft- und dampfdicht sind, wie zum Beispiel einer Textilschicht und einem Schaumstoff, die auf je einer Seite des dritten Werkstoffs angebracht werden, der aus einer endlosen thermoplastischen Folie (5) besteht; diese Anlage umfaßt:

- Vorrichtungen zum kontinuierlichen Abspulen der genannten biegsamen Werkstoffe (4 und 6) in Bandform sowie der endlosen thermoplastischen Folie (5),

- Betriebsmittel, um die genannten Werkstoffe (4 und 6) über Aufheizvorrichtungen laufen zu lassen;

- Betriebsmittel zum kontinuierlichen Aufbringen und Andrücken der biegsamen Werkstoffe (4 und 6) auf je eine Seite der thermoplastischen Folie (5), um sie zusammen zu verschweißen;

diese Anlage ist dadurch gekennzeichnet, daß sie folgende Teile umfaßt:

- Vorrichtungen (7, 8 und 11), um die genannten biegsamen Werkstoffschichten (4 und 6) sowie die genannte thermoplastische Folie (5) einzeln und unabhängig voneinander auf je getrennt kontrollierte Temperaturen aufzuheizen,

- Vorrichtungen (16) zum Messen der Durchlässigkeit des so entstandenen endlosen Drei-Schicht-Verbundstoffes, zum Regeln und Einstellen der Schweißparameter, und zwar der Durchlaufgeschwindigkeit der biegsamen Werkstoffe (4 und 6) und der thermoplastischen Folie (5) und/oder des Drucks, der auf den Verbundstoff (14) ausgeübt wird, und/oder der Temperatur zum Aufheizen der thermoplastischen Folie (5), und/oder der Temperatur zum Aufheizen der biegsamen Werkstoffe (4 und 6), und/oder der Dicke der thermoplastischen Folie (5), um die gewünschte Durchlässigkeit zu erhalten.

9. Anlage nach Anspruch 8, dadurch gekennzeichnet, daß die Vorrichtung (16) zur ständigen Messung die Form eines Senkkastens (17) hat, der mit einer Pumpe (18) verbunden ist, mit deren Hilfe im Senkkasten ein Druckgefälle in Bezug auf den Außendruck hergestellt werden kann; der genannte Senkkasten (17) hat eine Öffnung (19), über der der Verbundstoff (14) vorbeiläuft und so die genannte Öffnung abdeckt, daß eine bestimmte Luftmenge (20) durch den Verbundstoff (14) und die Öffnung (19) geht; die genannte Vorrichtung (16) reagiert als Funktion des Luftdurchsatzes, der durch die Öffnung (19) geht.

10. Anlage nach Anspruch 8, dadurch gekennzeichnet, daß sie folgende Teile umfaßt:

- Abrollhaspeln (1 bis 3) mit den aufgerollten biegsamen Werkstoffen (4 und 6) in Bandform, zum Beispiel einem Textilwerkstoff und einem Schaumstoff, sowie der thermoplastischen Folie (5),

- aufheizbare Zylinder (7 und 8), über die die biegsamen Werkstoffe (4 und 6) laufen,

- Vorrichtungen (11) zum Aufheizen der thermoplastischen Folie (5), wie zum Beispiel einen Infrarot-Ofen (11),

- Kalanderrollen (12 und 13), die die biegsamen Werkstoffe (4 und 6) auf die thermoplastische Folie (5) aufdrücken, um die drei Werkstoffe zu einem Verbundstoff (14) zusammenzuschweißen.

## Claims

1. A process for the continuous production of a flexible complex of controlled permeability, especially intended for hanging of wall-tapestry, said complex being in the shape of an assembly of three flexible materials (4, 5 and 6), namely two layers of flexible materials (4 and 6) non air and steam-tight, for example a textile and a foam, disposed on both sides of the third material composed of a continuous thermoplastic film (5), said complex (14) being produced by heating the continuous material(s) (4 to 6) and welding the different flexible materials among themselves, characterized in that:

- each of the three layers (4 to 6) to be assembled before their bringing together each other are separately and independently heated by displacing the layers into heating means,

- the untight flexible materials (4 and 6) are welded with the intermediary thermoplastic film (5) by pressing the complex (14) formed by superposeing the film (5) between said flexible materials (4 and 6),

- the permeability of the complex (14) is continuously measured and in order to obtain the sought permeability, the following welding parameters are adjusted

* displacing speed of the flexible materials (4 and 6) and thermoplastic film (5),

* and/or pressure exerted upon the complex (14),

* and/or heating temperature of the thermoplastic film (5),

* and/or heating temperature of the flexible materials (4 and 6),

* and/or thickness of the thermoplastic film (5).

2. A process according to claim 1, characterized in that the thermoplastic film (5) to be welded is heated by displacing it into an infra-red furnace (11).

3. A process according to claim 1, characterized in that the flexible material (4 and/or 6) is heated by coming into contact with a heating cylinder (7 and/or 8).

4. A process according to claim 2, characterized in that the thermoplastic film (5) is heated in an infrared furnace.

5. A process according to claim 1, characterized in that the flexible materials (4 and 6) are welded with the thermoplastic film (5) by compressing the complex (14) between calendering rolls (12 and 13).

6. A process according to claim 5, characterized in that the flexible materials (4 and 6) are heated by rolling up them around the heating calendering rolls (7 and 8) which then press said materials (4 and 6) upon the thermoplastic film (5) inserted between said materials (4 and 6).

7. A prccess according to claim 1, characterized in that the thermoplastic film (5) is heated at a temperature higher than the temperature of said layers of untight flexible materials (4 and 6).

8. A plant for the continuous production of a flexible complex of controlled permeability, especially intended for hanging of wall-tapestry, allowing the use of the process described in claim 1, said complex being in the shape of an assembly of three flexible materials (4 and 6) non air and steam-tight, such as a textile and a foam, disposed on both sides of the third material composed of a continuous thermoplastic film (5), said plant comprising:

- means for continuously delivering said flexible materials (4 and 6) as a band and the continuous thermoplastic film (5),

- means for displacing said materials (4 to 6) into heating means,

- means for continuously applying and compressing the flexible materials (4 and 6) on both sides of the thermoplastic film (5) in order to weld them together,

characterized in that it comprises:

- means (7, 8 and 11) for separately and independently heating said layers of flexible materials (4 and 6), as the thermoplastic film (5), at independently controlled temperatures,

- means (16) for measuring the permeability of the so formed three-layers complex for bringing under control and adjusting the welding parameters, namely the displacing speed of the flexible materials (4 and 6) and thermoplastic film (5) and/or the pressure exerted upon the complex (14), and/or the heating temperature of the thermoplastic film (5), and/or the heating temperature of the flexible materials (4 and 6), and/or the thickness of the thermoplastic film (5) in order to obtain the sought permeability.

9. A plant according to claim 8, characterized in that the continuous measuring device (16) is in the shape of a box (17) connected with a pump (18) which allows to create in the box a pressure difference with respect to the cuter atmospheric pressure, said box (17) having an aperture (19), over which moves across the complex (14) which masks said aperture so that a certain air stream (20) passes through the aperture (19) by crossing the complex (14), said device (16) reacting as a function of the air flow-rate passing through the aperture (19).

10. A plant according to claim 8, characterized in that it comprises:

- reeling-apparatus (1 to 3) on which are disposed the flexible materials (4 and 6) as a band, for example a textile or a foam and the thermoplastic film (5),

- heating cylinders (7 and 8) with which the flexible materials (4 and 6) come into contact,

- heating means (17) of the thermoplastic film (5), such as an infra-red furnace (11),

- calendering rolls (12 and 13) which press the flexible materials (4 and 6) upon the thermoplastic film (5) in order to assemble them by welding and form a complex (14).

FIG 1

0 145 629

FIG 2